**Europäisches Patentamt**

**European Patent Office**

**Office européen des brevets**

(19)

(11)  **EP 1 234 193 B1**

(12)  # EUROPÄISCHE PATENTSCHRIFT

(45)  Veröffentlichungstag und Bekanntmachung des Hinweises auf die Patenterteilung:
**15.09.2004  Patentblatt 2004/38**

(51)  Int Cl.$^7$: **G01S 17/89**, G01S 7/48, G01S 7/487, G01B 11/02, G01B 11/24, C21C 5/46, F27D 21/00, C21C 5/44

(21)  Anmeldenummer: **00977794.7**

(22)  Anmeldetag: **28.11.2000**

(86)  Internationale Anmeldenummer:
**PCT/IB2000/001762**

(87)  Internationale Veröffentlichungsnummer:
**WO 2001/038900 (31.05.2001 Gazette 2001/22)**

(54)  **VERSCHLEISSMESSUNG DER FEUERFESTAUSKLEIDUNG EINES METALLURGISCHEN GEFÄSSES**

MEASUREMENT OF THE WEAR OF THE FIREPROOF LINING OF A METALLURGICAL VESSEL

MESURE DE L'USURE DU REVETEMENT REFRACTAIRE D'UN RECIPIENT METALLURGIQUE

(84)  Benannte Vertragsstaaten:
**AT BE CH CY DE DK ES FI FR GB GR IE IT LI LU MC NL PT SE**

(30)  Priorität: **29.11.1999  DE 19957375**

(43)  Veröffentlichungstag der Anmeldung:
**28.08.2002  Patentblatt 2002/35**

(73)  Patentinhaber: **Specialty Minerals Michigan Inc. Bingham Farms, Michigan 48025 (US)**

(72)  Erfinder:
- **KIRCHHOFF, Stefan**
  **44287 Dortmund (DE)**
- **CARLHOFF, Christoph**
  **47877 Willich (DE)**

- **LAMM, Rolf**
  **52066 Aachen (DE)**

(74)  Vertreter: **GROSSE BOCKHORNI SCHUMACHER Patent- und Rechtsanwälte Frühlingstrasse 43A 45133 Essen (DE)**

(56)  Entgegenhaltungen:
**EP-A- 0 632 291          EP-A- 0 661 518
WO-A-98/16801            DE-A- 19 808 462
US-A- 5 125 745          US-A- 5 212 738
US-A- 5 682 229**

- **PATENT ABSTRACTS OF JAPAN vol. 014, no. 294 (C-0732), 26. Juni 1990 (1990-06-26) & JP 02 093013 A (NKK CORP;OTHERS: 01), 3. April 1990 (1990-04-03)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Identifikation und Bestimmung der Position eines Objekts, insbesondere eines metallurgischen Gefäßes bei der Verschleißmessung seiner Feuerfestauskleidung.

Um eine Effektivitätssteigerung und eine erhöhte Betriebssicherheit von feuerfesten Auskleidungen metallurgischer Gefäße in Stahlwerken zu erzielen, ist es notwendig, möglichst viele Informationen über den Verschleiß der Auskleidungen während der Benutzung (der sogenannten "Reise") der Gefäße zu erhalten.

Dabei ist insbesondere die genaue Kenntnis der Dicke der feuerfesten Auskleidung, auch "Reststeinstärke" genannt, von besonderer Bedeutung, da sie eine effektive Ausnutzung der feuerfesten Auskleidung bis zur Verschleißgrenze gestattet, ohne daß hierdurch eine erhöhte Gefahr des Durchschmelzens des metallischen Mantels des metallurgischen Gefäßes besteht.

Es existiert daher bereits seit längerer Zeit das Bestreben, Meßmethoden zu entwickeln, die eine präzise Vermessung der metallurgischen Gefäße ermöglichen. Diese sollte aus Zeit- und Kostengründen keine Abkühlung des Gefäßes voraussetzen, sondern in dem noch heißen Gefäß durchführbar sein. Eine berührende Vermessung scheidet bereits deswegen und auch wegen der Unzugänglichkeit vieler metallurgischer Gefäße von vornherein aus.

Es ist daher von der Firma Ferrotron Elektronik GmbH, Moers ein berührungsloses Meßverfahren zur Bestimmung des Verschleißes der Auskleidung bekannt geworden, bei welchem die Innenfläche des Gefäßes von einem Laserstrahl abgetastet wird und durch Abstands- und Winkelmessungen die Oberflächenstruktur der feuerfesten Auskleidung abgebildet werden kann. Durch Vergleich mit einer an dem metallurgischen Gefäß vor seiner Reise durchgeführten Referenzmessung kann die Reststeinstärke ermittelt werden.

Voraussetzung für eine Verschleißmessung der feuerfesten Auskleidung metallurgischer Gefäße mittels berührungsloser Verfahren ist die Bestimmung der Lage des Objektkoordinatensystems des auszumessenden metallurgischen Gefäßes relativ zu dem Gerätekoordinatensystem der für die Messung verwendeten Meßanordnung, damit die Meßanordnung und das Gefäß durch Koordinatentransformation in dasselbe Koordinatensystem gebracht werden können.

Um das bei einer Referenzmessung des Gefäßes vor der Reise zugrundeliegende Objektkoordinatensystem bei einer anschließenden Verschleißmessung rekonstruieren zu können, ist beispielsweise aus der US-PS 4 025 192 ein optisches Verfahren zur Vermessung der Auskleidung eines metallurgischen Gefäßes bekannt. Bei diesem Verfahren werden in einem ersten Schritt die Koordinaten von drei Referenzpunkten um das Mundloch des metallurgischen Gefäßes mit einem Theodoliten durch Winkel- und Abstandsmessungen bestimmt und die Auskleidung ebenfalls durch Winkel- und Abstandsmessungen einzelner Punkte vermessen.

Nach Benutzung des Gefäßes werden die Referenzpunkte und die Auskleidung erneut vermessen und durch Vergleich der Koordinaten der zuerst gemessenen Referenzpunkte mit den zuletzt gemessenen Koordinaten mit den Referenzpunkten in die aktuelle Lage des Objektkoordinatensystems gegenüber der Lage des Gerätekoordinatensystems ermittelt und eine Lageänderung bei der Auswertung der Meßpunkte für die Auskleidung berücksichtigt. Die vom Meßgerät ausgesendete elektromagnetische Strahlung wird mit Hilfe eines Zielfernrohrs manuell auf die Bezugspunkte ausgerichtet.

Zwar hat sich gezeigt, daß mit diesem Verfahren die Position und Orientierung des Gefäßes bestimmt und vor einer anschließenden Verschleißmessung auch rekonstruiert werden kann, nachteilig ist jedoch, daß dieses Verfahren wegen seiner manuellen Durchführung aufwendig ist und eine erhebliche Fehlerwahrscheinlichkeit besteht.

Aus diesem Grunde und da die Automatisierung des Verfahrens besonders schwierig erschien, wurde ein in der DE 196 14 564 A1 beschriebenes Verfahren entwickelt, bei dem ein auf der Mantelfläche des Gefäßes vorgesehenes Richtzeichensystem von einem Kameragerät während der Referenzmessung und vor der sich anschließenden Verschleißmessung aufgenommen wird. Aus dem Unterschied in der Position sowie der geometrischen Form des Richtzeichensystems wird auf die Unterschiede in der Position des Gefäßes zwischen der Referenz- und der Meßsituation geschlossen. Zwar ist mit diesem Verfahren prinzipiell eine Automatisierung gegeben, nachteilig ist jedoch, daß die erreichbare Meßgenauigkeit einerseits wegen der zwangsläufig geringen Größe des Richtzeichensystems und der hierdurch bedingten geringen Verlagerung einzelner Punkte des Richtzeichensystems bei Lageänderung des Gefäßes, andererseits aufgrund der lediglich zweidimensionalen Lagebestimmung der Bezugspunkte beschränkt ist. Ferner setzt dieses Verfahren eine separate, vorgeschaltete Bestimmung der Position des Gefäßes relativ zu dem Meßgerät voraus, wodurch sich der für die Durchführung der Verschleißmessung benötigte Zeitaufwand erhöht.

Aus der DE 198 08 462 A1 ist ein Verfahren bekannt, bei dem drei an dem metallurgischen Gefäß vorgesehene Bezugspunkte zunächst durch eine optische Erkennungseinrichtung erfaßt, die genaue Position der Bezugspunkte im Raum jedoch anschließend nach automatischer Ausrichtung der Meßanordnung nacheinander auf die Bezugspunkte mittels der eigentlichen Meßanordnung, die eine LASER-Distanzmeßeinrichtung umfassen kann, ermittelt werden.

Zwar ist die Meßgenauigkeit dieses Verfahrens gegenüber demjenigen aus der DE 196 14 564 A1 bereits erhöht, weil durch die Benutzung der eigentlichen Meßanordnung auch zur Bestimmung der Lage der Referenzpunkte dreidimensionale Informationen erhalten werden, nachteilig ist jedoch, daß es hierzu vorab einer Referenzmessung mittels der optischen Erkennungseinrichtung bedarf.

Ein weiteres Verfahren zur Bestimmung der Lage eines metallurgischen Gefäßes ist aus der US 5 212 738 bekannt, deren Gegenstand als gattungsbildender Stand der Technik den Oberbegriffen der Ansprüche 1 und 13 zugrundeliegt. Bei diesem wird das Gefäß aus zwei verschiedenen Positionen vermessen, die Lagebestimmung erfolgt durch Überlagerung der Bilder.

Nachteilig ist bei diesem Verfahren, daß die Positionen relativ zueinander genau bekannt sein müssen, wodurch der Meßaufwand erhöht ist.

Der Erfindung liegt die Aufgabe zugrunde, ein Verfahren zu schaffen, mit dem ein Objekt, insbesondere ein metallurgisches Gefäß, durch Erkennung einer zwei- oder dreidimensionalen Struktur, die durch das Gefäß selbst oder durch eine in definiertem Bezug zum Gefäß stehende ortsfeste Konstruktion mit bekannter Geometrie gebildet sein kann, identifiziert und dessen Position relativ zu einer optischen Erkennungseinrichtung ermittelt werden kann, ohne daß es hierzu mehrerer Messungen aus verschiedenen Positionen bedarf.

Diese Aufgabe wird durch die in Anspruch 1 wiedergegebene Erfindung gelöst.

Die Erfindung macht sich zunutze, daß die räumlichen Meßdaten, welche mit einem mit elektromagnetischer Strahlung arbeitenden Distanzmeßgerät, beispielsweise einem Laserdistanz-Scanner, aufgenommen werden, in Polarkoordinaten vorliegen, und zwar geordnet in einem Raster der Winkel $\varphi(m)$, $\vartheta(n)$ ($\Delta\varphi$ = konstant, $\Delta\vartheta$ = konstant) relativ zur Lage des Meßkopfes und den zugehörigen Distanzwerten Rad(m,n).

Eine typische Dimension der so gebildeten zweidimensionalen Meßwertmatrix m x n ist 450 x 450.

Wenn im folgenden von "Pixel" die Rede ist, so ist ein einzelner Punkt dieser Matrix gemeint. Die sich aus den zugehörigen Distanzwerten Rad(m,n) ergebende Abbildung wird mit "Distanzbild" bezeichnet.

Neben der Distanz Rad(m,n) kann zu jedem Pixel der zugehörige Intensitätswert des reflektierten Laser-Pulses Amp(m,n) detektiert werden. Analog zum Distanzbild ergibt sich hieraus das sogenannte Amplitudenbild.

Beim Vorliegen von Meßwerten in einem solch gleichmäßigen Raster ist es aus der Bildverarbeitung bekannt, Matrixoperatoren anzuwenden, wobei die Distanzwerte wie die Grauwerte eines Kamerabildes behandelt werden. Hierbei besteht jedoch der Nachteil, daß bei veränderlichem Abstand zwischen Meßgerät und Meßobjekt, was regelmäßig bei der Verschleißmessung einer Feuerfestauskleidung eines metallurgischen Gefäßes der Fall ist, dieses Verfahren nicht der Tatsache gerecht wird, daß sich die Größe der abgebildeten Strukturen mit der Distanz Rad(m,n) und der Polarwinkellage ($\varphi,\vartheta$) ändert. Diese konventionellen Operatoren müßten demnach in einer solchen Vielzahl skaliert werden, daß sie allen vorkommenden Meßsituationen gerecht würden. Dies würde einen enormen Rechenaufwand bedeuten und das Risiko von Fehlerkennungen in sich bergen.

Bei dem erfindungsgemäßen Verfahren wird gemäß Anspruch 2 zwar - wie bei der Bildverarbeitung - die gesamte Matrix oder ein Teilbereich derselben in diskreten Schritten hinsichtlich bestimmter Strukturen analysiert, es werden jedoch zur Skalierung der Operatoren die gemessenen Distanzwerte bzw. auch die zugehörigen Polarwinkel genutzt. Dies geschieht dadurch, daß bei der Suche um einen beliebigen Pixel (m,n) herum nach einer Struktur von bekannter räumlicher Dimension zunächst der gemessene Distanzwert Rad(m,n) und die Meßwinkel $\varphi(m)$, $\vartheta(n)$ zur Skalierung des Operators herangezogen werden. Hierbei bedeutet Skalierung des Operators, daß seine Ausdehnung [imax, jmax] und Auflösung [$\Delta i,\Delta j$] im Pixelkoordinatensystem i: [-imax, imax, $\Delta i$], j: [-jmax, jmax, $\Delta j$] und die Erwartungswerte des Operators R(m+i, n+j) an die gemessenen Polarkoordinaten Rad(m,n), $\varphi(m)$, $\vartheta(n)$, angepaßt werden. Die Erwartungswerte des Operators berechnen sich aus der bekannten zwei- oder dreidimensionalen räumlichen Struktur. Der Operator stellt daher die Idealform der Struktur dar. Die Bildgröße der Struktur wird vorzugsweise in Anzahl von Pixeln angegeben. Der Ergebniswert des Operators an der Stelle (m,n) kann dann über die quadratische Abweichung zwischen Erwartungswert R und gemessener Distanz Rad berechnet werden gemäß

$$S(m,n) = \sum_{i,j} \{R(m+i,n+j) - Rad(m+i,n+j)\}^2 / norm\,(m,n)$$

wobei norm(m,n) den Ergebniswert bezüglich der jeweils abgetasteten Pixelanzahl normiert.

Die Ergebnismatrix S(m,n) läßt sich dann auf konventionelle Weise bezüglich ihrer Minimumpositionen auswerten, aus denen sich dann die räumlichen Koordinaten des gesuchten Objektes (bzw. der Objekte) berechnen lassen.

Bei der Anwendung des erfindungsgemäßen Verfahrens werden gemäß Anspruch 3 vorzugsweise die folgenden Verfahrensschritte durchgeführt:

1. Definition des Operators im zwei-dimensionalen bzw. drei-dimensionalen kartesischen Raum anhand der bekannten zu suchenden Form und Größe der Struktur;

2. Sodann wiederholt in Form einer Schleife

    i) Pixelweises Abtasten der Matrix Rad(m,n);

    ii) Skalieren des Operators anhand der aktuellen abgetasteten Koordinate, in dem

        a) die Pixelgrenzen im gerasterten Polarkoordinatenbild

        b) die Erwartungsdistanzen R(m+i,n+j) für alle Pixel des Operators in den zuvor berechneten Grenzen

    berechnet werden.

    iii) Berechnen des Operators an der abgetasteten Stelle P(m,n) über die quadratische Abweichung zwischen Erwartungsdistanz und gemessener Distanz zu

$$S(m,n) = \sum_{i,j} \{R(m+i,n+j) - Rad(m+i,n+j)\}^2 / norm(m,n)$$

3. Auswählen der gesuchten Koordinate Rad(m_opt,n_opt) bzw. Rad($\varphi$_opt, $\vartheta$_opt) mit dem besten Operator-Ergebniswert durch Minimumsberechnung.

Zusätzlich zu den Distanzwerten (Rad(m,n)) können gemäß Anspruch 3 Intensitätswerte (Amp(m,n)) der rückgestreuten elektromagnetischen Strahlung gemessen werden.

Bei einer ersten Ausführungsform des erfindungsgemäßen Verfahrens wird gemäß Anspruch 4 als Struktur eine Kugel verwendet. Sie ist besonders geeignet, weil die skalierbare Struktur des Operators nur von den Distanzen, aber nicht von den unterschiedlichen Betrachtungswinkeln abhängt. Der Operator ist definiert durch den bekannten Kugelradius und die allgemeine Kugelgeometrie. Als Ergebniskoordinate berechnet man zweckmäßigerweise den Mittelpunkt M der Kugel durch Addition des bekannten Kugelradius $\rho$. Diese Referenzpunkt-Koordinate wird zusammen mit weiteren gemessenen Referenzpunkt-Koordinaten zur Bestimmung der Gefäßposition im Gerätekoordinatensystem verwendet

Bei einer zweiten bevorzugten Ausführungsform des erfindungsgemäßen Verfahrens findet gemäß Anspruch 5 als Struktur eine farblich hell gegenüber der Umgebung abgesetzte flächenförmige Marke Verwendung. Der Operator - im folgenden "Amplituden-Operator" genannt - wird zunächst durch gemessene Distanzwerte Rad(m,n) skaliert und somit die zu erwartende Größe der Marke berechnet. Die Marke wird dann durch Anwendung bekannter Korrelationsverfahren im Amplitudenbild gesucht. Als Meßmarke könnte eine kreuzförmige helle Marke am Konverterboden angebracht sein. Ist eine Pixelposition optimaler Übereinstimmung ermittelt worden, kann dessen Raumkoordinate im Gerätesystem unter Einbeziehung des zugehörigen Distanzwertes Rad(m,n) berechnet werden.

Bei einer dritten Ausführungsform des erfindungsgemäßen Verfahrens dient gemäß Anspruch 6 als Struktur das Gefäß selbst. Diese Auswahl der Struktur ist insbesondere zur Vermessung von Gefäßen einer zylinderförmigen Grundstruktur geeignet. Der Operator - im folgenden "V-Operator" genannt - sucht dann zunächst einen Punkt auf der Gefäßmündung und von diesem aus berechnet er mindestens zwei weitere Punkte auf der Mündung des Gefäßes, wobei zur Kontrolle mindestens ein Punkt im Gefäßinneren gesucht wird. Mit dieser Ausführungsform des Verfahrens ist die Position und Orientierung des Gefäßes auch in gekipptem Zustand grob zu bestimmen. Sie ist für nachgeschaltete Berechnungen, zum Beispiel die genaue Lageberechnung des Gefäßes vorzugsweise nach der unten beschriebenen Ausführungsform des erfindungsgemäßen Verfahrens, notwendig.

Die nachgeschaltete, der genauen Lageberechnung des Gefäßes dienende Ausführungsform des erfindungsgemäßen Verfahrens bedient sich als Struktur der Gefäßmündung. Anhand der im vorherigen Verfahrensschritt gefundenen groben Positionen werden die Distanz- und Winkelwerte von Punkten auf der Gefäßmündung in radial zur gefundenen Gefäßmitte verlaufenden Suchfenstern betrachtet. Hieraus läßt sich dann ein Vektor Rad(K) extrahieren, auf welchem nach einer Strecke der vorgegebenen Länge b, die der Dicke des Mündungsringes entspricht (in kartesischen Koordinaten), mittels eines skalierten Operators - im folgenden "Mündungsoperator" genannt - gesucht wird. Aus der durch den V-Operator gemessenen Kipplage des Gefäßes ergibt sich der Neigungswinkel $\gamma$ der zu suchenden Strecke.

Wird diese Ausführungsform des Verfahrens - wie gemäß Anspruch 7 bevorzugt - auf eine Mehrzahl von Suchfenstem angewandt, welche den gesamten gemessenen Mündungsbereich abdecken, so erhält man eine Menge von Mündungspunkten, aus denen sich dann über eine Kreisapproximation die gesuchte Lage der kreisförmigen Mündung berechnen läßt.

Während der Reise des metallurgischen Gefäßes kommt es vor, daß die Mündung derart stark verunreinigt wird, daß ein Punkt auf der Gefäßmündung von dem V-Operator nicht mit Sicherheit identifiziert und somit die Kipplage des Gefäßes nicht ermittelt werden kann.

In diesem Falle wird eine Ausführungsform des erfindungsgemäßen Verfahrens bevorzugt, bei der andere zylindrische Strukturen des Gefäßes zu dessen Positionsbestimmung herangezogen werden, beispielsweise ein das Gefäß außen umgebender Ring oder Kragen. In diesem Falle wird der Kippwinkel gemäß Anspruch 8 zweckmäßig mit Hilfe eines Inklinometers ermittelt.

Bei einer weiteren, bevorzugten Ausführungsform des erfindungsgemäßen Verfahrens wird gemäß Anspruch 9 als Struktur der Übergangsbereich von Wand und Boden des Gefäßes verwendet und der Operator - im folgenden "Wand-Boden-Operator" genannt - durch zwei Strecken der Längen $\Delta x$, $\Delta z$ definiert, deren Enden sich in einem Punkt berühren und in einem vorgegebenen Winkel $\delta$ zueinander stehen. Wie bei der voranstehend beschriebenen Ausführungsform des erfindungsgemäßen Verfahrens wird hierdurch der Verlauf des Gefäßprofils im Übergangsbereich von Wand zu Boden schematisiert, diese Struktur skaliert und innerhalb eines radial zur grob ermittelten Gefäßmitte verlaufenden Suchfensters lokalisiert. Die Lage des kreisförmigen Wand-Bodenübergangs ergibt sich dann aus einer geeignet großen Anzahl solcher Suchoperationen.

Das erfindungsgemäße Verfahren kann gemäß den Ansprüchen 10, 11, 12 insbesondere zur Bestimmung der Position eines Konverters, einer Pfanne oder eines Lichtbogenofens relativ zum Meßgerät Verwendung finden.

Die Anwendung bei Lichtbogenöfen, die üblicherweise einen aufrechtstehenden, topfförmigen Ofenkörper umfassen, dessen Inneres nur von oben zugänglich ist, ist mit dem erfindungsgemäßen Verfahren erstmalig auch bei noch heißem Ofen möglich, da die Meßzeit grundsätzlich kürzer als 20 sec ist und die Meßeinrichtung ohne unvertretbar großen Aufwand so ausgerüstet werden kann, daß sie für diese Zeitspanne der während des Meßvorganges auf sie einwirkenden Hitze standhält.

Eine zur Durchführung des erfindungsgemäßen Verfahrens besonders geeignete Vorrichtung ist gemäß Anspruch 13 ausgebildet.

Weist die Vorrichtung gemäß Anspruch 14 zusätzlich Mittel zum Erfassen der Amplitude der an dem Objekt reflektierten elektromagnetischen Strahlung auf, so kann mit ihr ein Amplitudenbild aufgenommen werden, das in Praxis eine Ähnlichkeit mit einem schwarz/weiß-Foto besitzt. Durch das Amplitudenbild kann insbesondere überprüft werden, ob das Objekt (metallurgisches Gefäß) den Bildausschnitt ausfüllt und es kann eine optische Kontrolle der des mit dem erfindungsgemäßen Verfahren erhaltenen Ergebnisses erfolgen.

Ist gemäß Anspruch 15 zusätzlich eine Einrichtung zum Erfassen der etwa an dem die elektromagnetische Strahlung reflektierenden Ort abgestrahlten Wärmestrahlung vorgesehen, so können Wärmeverteilungsbilder aufgenommen werden, die beispielsweise Aufschluß über besonders stark temperaturbeanspruchte Bereiche des Gefäßes liefern können.

Die Sendeeinrichtung umfaßt vorzugsweise eine im Pulsbetrieb betriebene LASER-Diode, die Empfangseinrichtung ist zweckmäßig als Foto-Diode ausgebildet (Ansprüche 16, 17).

Zur Durchführung der Messung wird - wie bereits erläutert - ein Meßwertraster aufgenommen. Die hierzu erforderliche periodische Ablenkung des LASERS erfolgt gemäß Anspruch 18 vorzugsweise mittels eines um eine horizontale Achse rotierenden Polygonspiegels in vertikaler Richtung und gemäß Anspruch 19 durch Hin- und Herbewegen der Meßeinrichtung um eine vertikale Achse in horizontaler Richtung.

Insbesondere zur Positionsbestimmung eines Lichtbogenofens und anschließenden Vermessung seiner Feuerfestauskleidung geeignet ist die Vorrichtung dann, wenn sie an einem Tragarm angebracht ist, der zwischen einer von dem metallurgischen Gefäß entfernten Position und einer Position oberhalb oder innerhalb des geöffneten Gefäßes hin- und herbewegbar ist (Anspruch 20).

In diesem Falle ist es des weiteren möglich und für sich genommen von erfinderischer Bedeutung, an dem Tragarm in zur Meßeinrichtung fester räumlicher Beziehung eine Einrichtung zum Auftrag von Feuerfestmaterial in das Innere des Gefäßes vorzusehen (Anspruch 21).

Bei dieser Einrichtung zum Auftrag von Feuerfestmaterial kann es sich insbesondere um einen an sich von der Firma MINTEQ International Inc. unter der Bezeichnung MINSCAN™ bekannten Spritzroboter handeln (Anspruch 22), der mit seiner Spritzdüse dreh-, kipp- und höhenverlagerbar in das Innere des Gefäßes einbringbar ist.

Die Steuerung dieses Spritzroboters ist direkt mit den mit der Vorrichtung erfaßten Verschleißdaten möglich.

Durch eine weitere Messung des Gefäßinnern in der beschriebenen Weise kann eine Dejustierung des Spritzroboters durch den sichtbar werdenden Fehlauftrag erfaßt werden. Befinden sich die Meßeinrichtung und die Spritzdüse in fester räumlicher Beziehung zueinander auf dem Tragarm, so kann mit Hilfe des erfindungsgemäßen Verfahrens die tatsächliche Position der Spritzdüse in dem Gefäß vor dem Spritzauftrag ermittelt und somit Fehlauftragungen verhindert werden.

Das erfindungsgemäße Verfahren und eine zur Durchführung des Verfahrens geeignete Vorrichtung sollen anhand der Figuren verdeutlicht werden. Es zeigen:

Fig. 1 - schematisch - eine zur Durchführung des erfindungsgemäßen Verfahrens geeignete Vorrichtung;

Fig. 2 - schematisch - das Prinzip der vorzugsweise zur Distanzbestimmung eingesetzten Puls-Laufzeitmessung;

Fig. 3 a - c die bei der Positionsbestimmung eines Objektes mit Hilfe des erfindungsgemäßen Verfahrens maßgeblichen Koordinatensysteme am Beispiel eines zylindrischen Gefäßes;

Fig. 4 a einen Längsschnitt durch ein einseitig geschlossenes zylindrisches Gefäß in kartesischen Koordinaten;

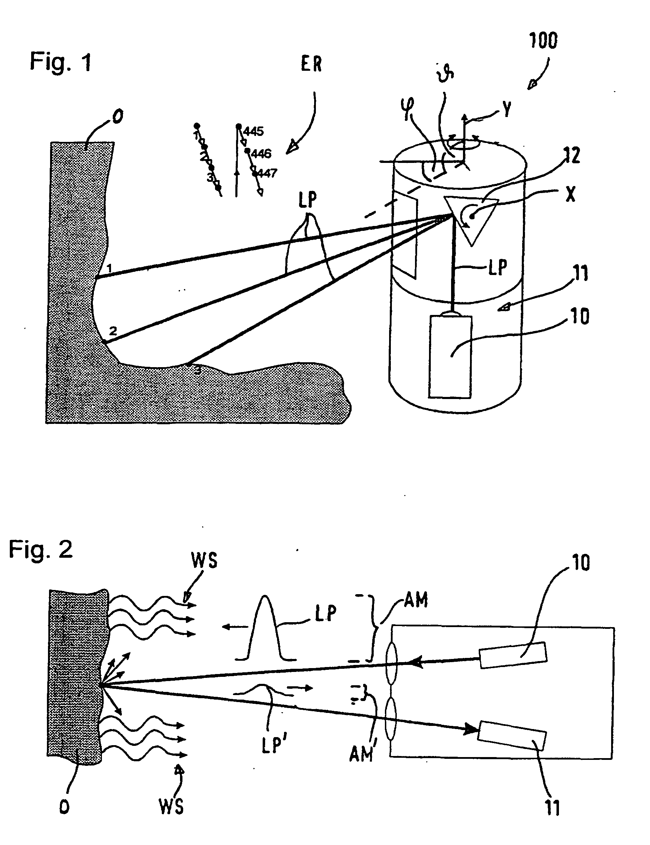

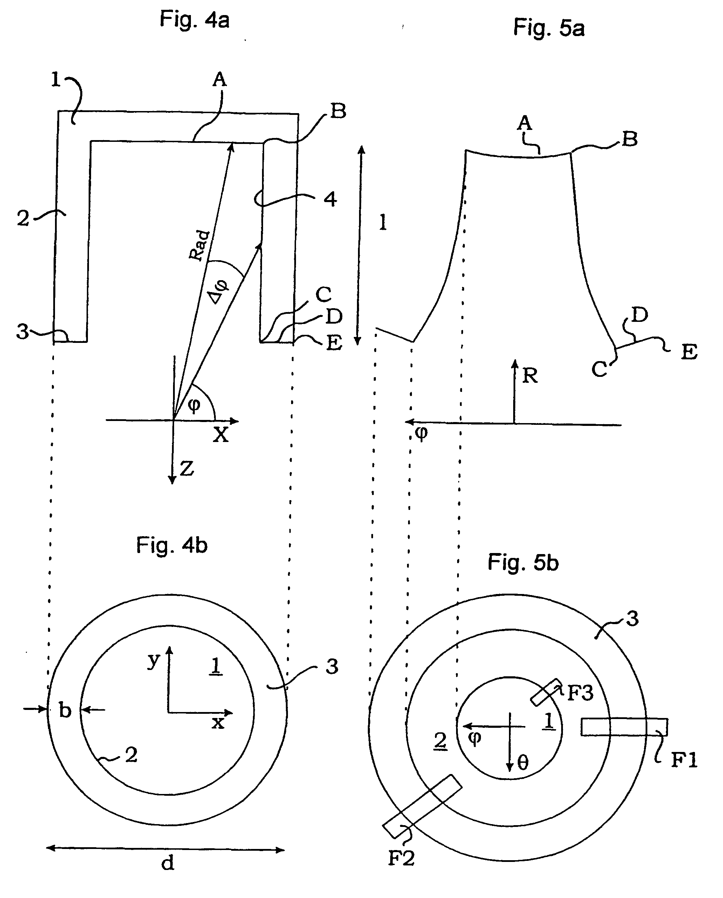

Fig. 4 b dasselbe Gefäß in einer mündungsseitigen Ansicht (Ansicht A in Fig. 1a) ebenfalls in kartesischen Koordinaten;

Fig. 5 a eine Fig. 1a entsprechende Ansicht desselben Gefäßes in Polarkoordinaten;

Fig. 5 b dasselbe Gefäß in einer Fig. 1b entsprechenden Ansicht in Polarkoordinaten;

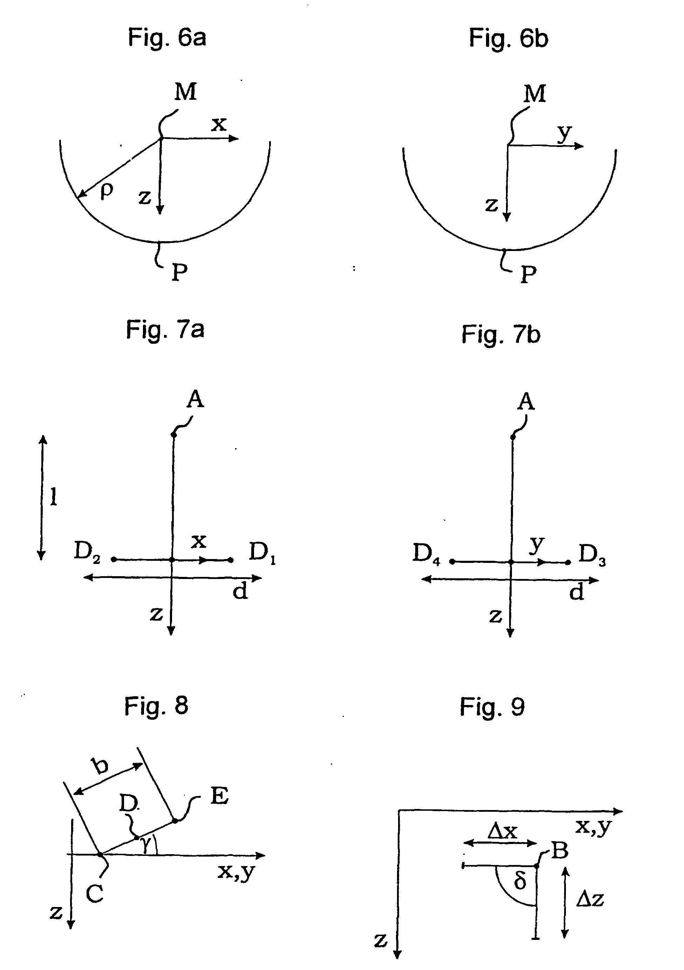

Fig. 6 a und b - schematisch - in zwei zueinander senkrechten Ansichten die Koordinaten des Kugeloperators;

Fig. 7 a und b - schematisch - in zueinander senkrechten Darstellungen die Koordinaten des sogenannten V-Operators;

Fig. 8 - schematisch - die Koordinaten des zweidimensionalen Mündungsoperators;

Fig. 9 - schematisch - die Koordinaten des zweidimensionalen "Wand-Boden-Operators" sowie

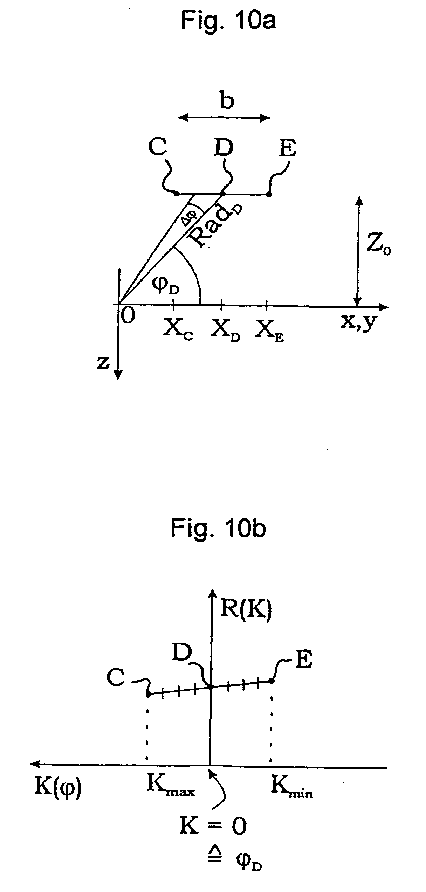

Fig. 10 a und b am Beispiel des Mündungsoperators einen Meßvorgang in kartesischen Koordinaten bzw. in gerasterten Polarkoordinaten zur Verdeutlichung der nachfolgenden Beispielrechnung.

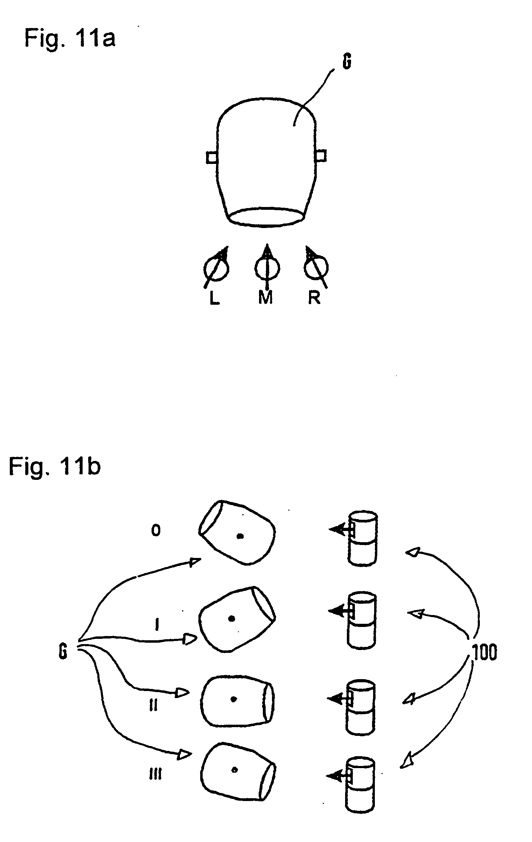

Fig. 11 a - schematisch - verschiedene Meßpositionen des Meßgerätes zum Objekt im Drehachsensystem;

Fig. 11 b - schematisch - verschiedene Kippstellungen des Objekts im Drehachsensystem;

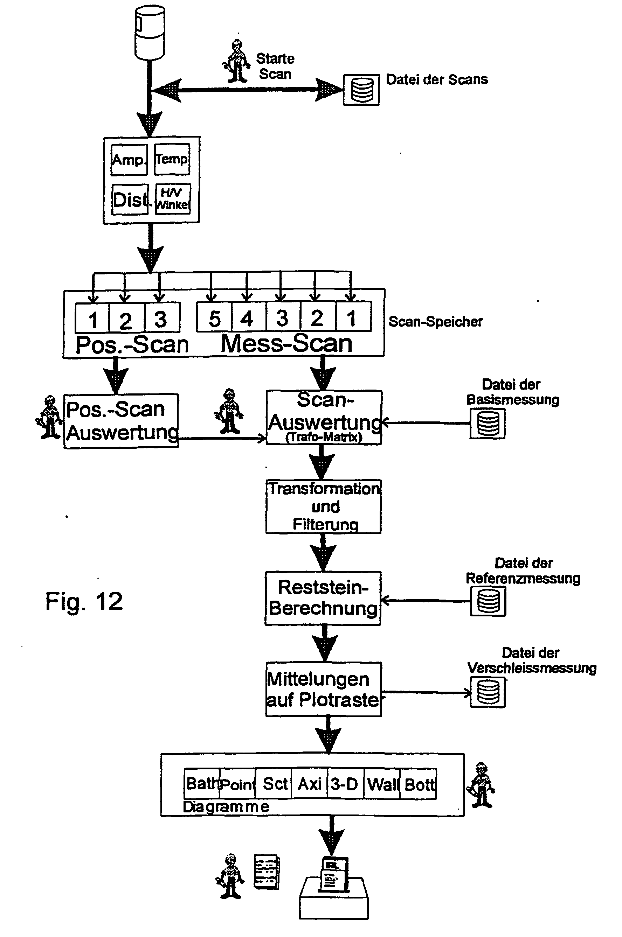

Fig. 12 eine mittels des erfindungsgemäßen Verfahrens durchgeführte Verschleißmessung eines Konverters im Datenflußschema.

Bei der Durchführung des erfindungsgemäßen Verfahrens kann ein in Fig. 1 als Ganzes mit 100 bezeichnetes Meßgerät Verwendung finden, das einen Sender 10 zur Erzeugung von LASER-Pulsen LP, Einrichtungen zur Ablenkung der LASER-Pulse in gewünschte Raumrichtungen sowie einen Empfänger 11 zum Detektieren an einem Objekt O reflektierter LASER-Pulse umfaßt. Sender 10 und Empfänger 11 sind mit einer Zeiterfassungselektronik verbunden, die die Zeit zwischen dem Aussenden eines LASER-Pulses von dem Sender 10 und dem Empfangen des an dem Objekt O reflektierten LASER-Pulses LP von dem Empfänger 11 ermittelt und unter Berücksichtigung der Lichtgeschwindigkeit die Entfernung des reflektierenden Objekts O zu dem Meßgerät 10 berechnet und zur jeweils zugehörigen Raumrichtung gespeichert.

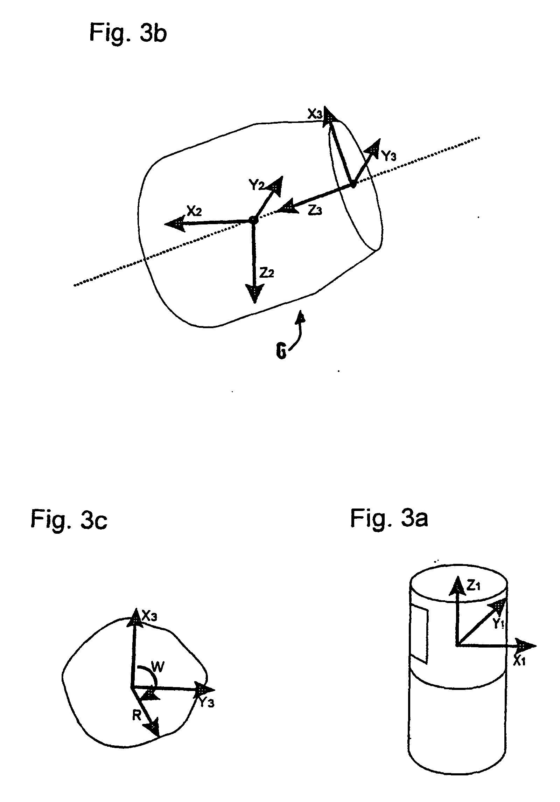

Als Sender 10 können eine LASER-Diode, als Empfänger 11 eine Photodiode dienen. Die Einrichtungen zur Ablenkung der LASER-Pulse können ein um eine senkrecht zu seinen einander parallelen Seiten verlaufende Achse X (Achse $Y_1$ in Fig. 3a) rotierbarer Polygonspiegel 12, dessen spitzwinklig aufeinandertreffende Seiten die LASER-Pulse reflektieren, sowie eine Vorrichtung zum Schwenken der Meßeinrichtung 10 um eine zur Achse X senkrechte Achse Y (Achse $Z_1$ in Fig. 3a) umfassen. Die Rotationsgeschwindigkeit des Polygonspiegels 12 beträgt bei dem dargestellten Ausführungsbeispiel 10 Umdrehungen pro Sekunde, das Schwenken der Meßeinrichtung erfolgt mit 2° pro Sekunde. Die LASER-Diode emittiert 20000 Pulse pro Sekunde.

Bei der in Fig. 1 dargestellten Vorrichtung erfolgt durch Rotation des Polygonspiegels 12 eine schnelle Ablenkung der LASER-Pulse in vertikaler Richtung (in Fig. 1 sind schematisch die Laufrichtungen von drei aufeinanderfolgenden LASER-Pulsen dargestellt, die an den Stellen 1, 2, 3 auf das Objekt O auftreffen), wogegen die Ablenkung der LASER-Pulse in horizontaler Richtung durch Hin- und Herschwenken des gesamten Meßgeräts um die Achse Y erfolgt. Da das Laserdistanzmeßgerät die Meßwerte in gleichmäßigen Zeitintervallen erzeugt und auch die Drehbewegungen gleichbleibend sind, erfolgt die Abtastung der Objektoberfläche in regelmäßigen Winkelschritten. Die Vertikalbewegung erfolgt immer von oben nach unten, während die Horizontalbewegung abwechselnd im und gegen den Uhrzeigersinn erfolgt. Mit dem Meßgerät 100 wird somit ein Entfernungsraster aufgenommen, das prinzipiell die in der Darstellung ER von Fig. 1 gezeigte Struktur aufweist. Dieses Entfernungsraster umfaßt typischerweise etwa 400 x 400 Meßpunkte (Pixel).

Der Empfänger 11 kann zusätzlich eine Einrichtung zur Erfassung der Wärmestrahlung WS, die von demjenigen Punkt des Objekts, dessen Entfernung gerade ermittelt wird, emittiert wird, aufweisen.

Wie aus Fig. 2 ersichtlich ist, hängt die Amplitude AM' des am Objekt O reflektierten LASER-Pulses LP' von der Amplitude AM des emittierten LASER-Pulses LP und der Oberflächenstruktur an der reflektierenden Stelle, beispielsweise der Rauhigkeit ab.

Mit dem Meßgerät 100 werden daher pro Meßpunkt die folgenden Meßwerte ermittelt:

- Distanz Rad zwischen Meßgerät und reflektierender Stelle des Objekts
- Amplitude des reflektierten LASER-Pulses LP'
- Wärmestrahlung WS an der reflektierenden Stelle des Objekts
- Horizontal- und Vertikalwinkel, unter der der LASER-Puls LP von dem Meßgerät emittiert wird.

Betrachtet man Horizontal- und Vertikalwinkel $\varphi$, $\vartheta$ als Koordinatenachsen und stellt man den Amplitudenmeßwert AM' als Grauwert an der entsprechenden Winkelkoordinate dar, so ergibt sich das Amplitudenbild, welches große Änlichkeit mit einem Schwarz-Weiß-Photo besitzt. Auf gleiche Weise lassen sich die Distanz- und Temperaturstrahlungsmeßwerte als Bilder darstellen, welcher aber über eine Farbskala kodiert werden können.

Das Amplitudenbild hat eine wesentliche Bedeutung für den Bediener des Meßgerätes:

a) Überprüfung, ob das Gefäß den Bildausschnitt gut ausfüllt;
b) Interaktive Scanauswertung bzw. Kontrolle der automatischen Scanauswertung mittels eingeblendeter Strukturelemente (Kreise etc.).

Das Distanzbild bildet die Grundlage für die Berechnung der Meßergebnisse. Die Daten des Distanzbildes können wegen ihrer regelmäßigen, gitterförmigen Anordnung zur automatischen Suche von Strukturen verwendet werden (z.B. Mündung, Tragring (truunion), Wand-Boden-Übergang, Kugeln etc.).

Wandelt man mittels einer Kalibriereinrichtung die Meßwerte des Temperaturstrahlungsbildes in Temperaturmeßwerte um und stellt diese im Objektkoordinatensystem dar, lassen sich insbesondere in Verbindung mit den ebenfalls gemessenen Reststeinstärken metallurgisch bedeutsame Informationen über den Wärmezustand (z. B. Temperaturverteilung, Wärmeinhalt der Feuerfestauskleidung) ermitteln.

Um eine Verschleißmessung beispielsweise der Feuerfestauskleidung eines metallurgischen Gefäßes mit Hilfe des Meßgerätes 100 in an sich bekannter Weise durchführen zu können, ist es erforderlich, vorab die relative Position von Meßgerät und Gefäß zu bestimmen.

Bei jeder räumlichen Vermessung müssen neben der Maßeinheit ein Bezugspunkt und die Richtung angegeben werden, auf die sich der Meßwert bezieht. Ein Punkt im Raum läßt sich durch drei Meßwerte beschreiben (Koordinaten), welche sich alle auf einen gemeinsamen Bezugspunkt (Ursprung) und jeweils senkrecht zueinander stehende Richtungen (Koordinatenachsen) beziehen. Im Zusammenhang mit dem erfindungsgemäßen Verfahren wird zwischen folgenden Koordinatensystemen unterschieden, die in Fig. 3 a - c am Beispiel eines metallurgischen Gefäßes dargestellt sind:

1) Gerätesystem $X_1$, $Y_1$, $Z_1$: Ursprung und Achsen festgelegt durch Meßkopf-Geometrie (Fig. 3a)

2) Drehachsensystem $X_2$, $Y_2$, $Z_2$: Ursprung = Mitte des Konverters auf der Drehachse, Z-Achse ($Z_2$) in Richtung 180° Drehwinkel, Y-Achse ($Y_2$) Drehachse (Fig. 3b)

3) Objektsystem $X_3$, $Y_3$, $Z_3$: Ursprung = Mittelpunkt Mündungsring 3, Z-Achse ($Z_3$) senkrecht auf Mündungsring 3, X-Achse ($X_3$) senkrecht auf Drehachse $Y_2$) (Fig. 3b). Ein Punkt im Objektsystem kann auch in zylindrischen Koordinaten W, R, Z3, dargestellt werden (vgl. Fig. 3c).

Nach der Aufnahme eines Meßscans liegen ca. 200.000 Meßpunkte in Polarkoordination $\varphi$, $\vartheta$, Rad als Koordinaten bezogen auf das Gerätesystem $X_1$, $Y_1$, $Z_1$ vor. In dieser Form lassen sich daraus noch keine Beurteilungen in bezug auf die Oberflächenstruktur des Objekts O, hier auf das Feuerfestmaterial $X_3$, $Y_3$, $Z_3$ durchführen. Dazu müssen die Meßpunkte bezogen auf das Objektsystem ausgedrückt werden (Koordinaten-Transformation). Weil regelmäßig das Meßgerät bei jedem Scan unterschiedlich zum Objekt steht, muß auch die Lage des Objektsystems $X_3$, $Y_3$, $Z_3$ zum Gerätesystem $X_1$, $Y_1$, $Z_1$ jedesmal neu ermittelt werden. Diese Auswertung liefert als Ergebnis die gesuchte Lage des Objektes, welche mathematisch in Form einer Transformationsmatrix ausgedrückt wird.

Am Beispiel eines zylindrischen Gefäßes G sollen im folgenden nun bevorzugte Ausführungsbeispiele des erfindungsgemäßen Verfahrens zur Bestimmung der Position des Gefäßes unter Bezugnahme auf Fig. 4 bis 12 erläutert werden.

Das in den Fig. 4a und b dargestellte zylindrische Gefäß G weist einen Boden 1, eine zylindrische Wandung 2 und eine Mündung 3 auf. Der Außendurchmesser des Mündungsringes, der in dem dargestellten Ausführungsbeispiel demjenigen der Wandung 2 entspricht, beträgt d, die Dicke des Mündungsringes b.

Zur Verdeutlichung sind in Fig. 4a und Fig. 5a, die dasselbe Gefäß in derselben Ansicht wie in Fig. 4a, jedoch in Polarkoordinaten zeigt, ein Punkt innerhalb des Gefäßes mit A, ein Schnittpunkt von Boden und Innenwandung 4 mit B, ein auf der inneren Begrenzungslinie der Mündung 3 liegender Punkt mit C, ein etwa in der Mitte der den Mündungsbereich bildenden Wandung liegender Punkt mit D sowie ein auf dem den Außenrand der Mündung bildenden Kreis liegenden Punkt mit E bezeichnet.

Wie Fig. 6a und 6b verdeutlichen sollen, spannt sich der Kugeloperator in den drei zueinander senkrechten Raumrichtungen in kartesischen Koordinaten auf, derart, daß der Ursprung des entsprechenden kartesischen Koordinatensystems mit dem Mittelpunkt M der Kugel zusammenfällt.

Demgegenüber spannt sich der dreidimensionale V-Operator zwischen auf der Mündung etwa in der Mitte zwischen innerer und äußerer Mündungsbegrenzung befindlichen Punkten D1, D2, D3, D4 und einem Punkt A innerhalb des Gefäßes auf.

Wie aus Fig. 8 ersichtlich ist, wird der Mündungsoperator im zwei-dimensionalen kartesischen Raum um einen Punkt D etwa in der Mitte zwischen innerer und äußerer Mündungsbegrenzung und den Punkten C und E, die auf der inneren bzw. äußeren Mündungsbegrenzung liegen, definiert.

Der ebenfalls zwei-dimensionale Wand-Boden-Operator ist durch zwei Strekken der Längen $\Delta x$, $\Delta z$ definiert, deren Enden sich in einem Punkt berühren und über dem dargestellten Ausführungsbeispiel in einem Winkel $\delta$ von 90° zueinander stehen. Hierdurch wird der Verlauf des Gefäßprofils im Übergangsbereich von Wand zu Boden schematisiert.

Das erfindungsgemäße Verfahren soll nun am Beispiel des Mündungsoperators mit der Koordinate $\gamma=0$ im Fenster F1 gemäß Fig. 5b unter Bezugnahme auf die Fig. 10a und b erläutert werden.

Der Mündungsoperator erstreckt sich zwischen den Punkten C, D und E, die die Wandung der Mündung begrenzen bzw. etwa in Wandungsmitte liegen (vgl. auch Fig. 8). Wie aus Fig. 10a ersichtlich ist, gilt für die Entfernung $Z_0$ für den Abtastpunkt D:

(1)

$$Z_0 = Rad_D \cdot \sin\varphi_D,$$

wobei $Rad_D$ und $\varphi_D$ Meßwerte des abgetasteten Pixels n sind.
Berücksichtigt man ferner, daß - wie sich ebenfalls aus Fig. 10a ergibt - gilt

(2)

$$X_D = Rad_D \cdot \cos\varphi_D,$$

so berechnen sich die Grenzen des Mündungsoperators zu:

$$X_C = X_D - b/2 \rightarrow \varphi_C = atan(Z_0/X_C) \rightarrow Kmax = round\ [(\varphi_C - \varphi_D)/\Delta\varphi]$$

$$X_E = X_D + b/2 \rightarrow \varphi_E = atan(Z_0/X_E) \rightarrow Kmin = round\ [(\varphi_E - \varphi_D)/\Delta\varphi]$$

Die Solldistanzen R(K) berechnen sich dann zu:

(3)

$$K=0: R_{(K=0)} := Rad_D(\varphi_D)$$

$$K=1 : R_{(K=1)} = Z_0/\sin(\varphi_D + \Delta\varphi)$$

$$\text{allg: } R_{(K)} = Z_0/\sin(\varphi_D + K^. \Delta\varphi) = Rad_D \cdot \frac{\sin \varphi_D}{\sin(\varphi_D + K^. \Delta\varphi)}$$

für $K \varepsilon [K_{min}, K_{max}]$
Es gilt dann für den Ergebniswert an der Abtastposition m:

(4)

$$S_{(m)} = \sum_{K=K_{min}}^{K_{max}} \{Rad(m+k) - R_{(K)}\}^2 \quad / (1+K_{max}-K_{min})$$

Die gesuchte Koordinate des Mündungspunktes errechnet sich dann durch die Bestimmung der Position bester Übereinstimmung gemäß

(5)

$$S\_opt = Min(S(m))$$

$$\rightarrow m\_opt = m (S\_opt)$$

$$\rightarrow \varphi\_opt = \varphi(m\_opt)$$

$$\rightarrow Rad\_opt = Rad(m\_opt)$$

Unter Bezugnahme auf Fig. 11a) und b) und 12 soll nun der Ablauf einer Verschleißmessung der Feuerfestauskleidung eines metallurgischen Gefäßes, dessen Position zum Meßgerät 100 mittels des erfindungsgemäßen Verfahrens ermittelt wird, beschrieben werden.

Hierzu kann zwischen drei fundamentalen Arten von Messungen bzw. deren Auswertungen unterschieden werden:

1) Basis-Messung
2) Referenz-Messung
3) Verschleiß-Messung

1) Die Basis-Messung, welche i.a. auf einem gesäuberten Gefäß erfolgt, vermißt die räumliche Anordnung folgender Strukturen am Gefäß:

- Lage einer permanent sauberen Struktur in bezug zum Drehachsensystem (Konverter) bzw. zum Objektsystem (Pfanne)

- Lage des Mündungsringes in bezug zum Drehachsensystem (Konverter)

Diese Information wird in einer gefäßspezifischen Basisdatei abgespeichert. Sie wird zur Bestimmung der Position des Gefäßes zum Meßgerät nach dem erfindungsgemäßen Verfahren vor Durchführung der Verschleißmessung benötigt.

2. Die Referenz-Messung ist i.a. die Vermessung des nur mit Dauerfutter ausgekleideten Gefäßes oder des vollständig ausgebrochenen Gefäßes (Stahlpanzer) und ist daher nur zu bestimmten Zeiten möglich (periodisch nach mehreren Wochen, Monaten oder Jahren). Statt über die Referenzmessung kann das Profil des Gefäßes mit oder ohne Dauerfutter auch einer Zeichnung entnommen werden (Editieren des Referenzprofils). Das Referenzprofil wird in einer Referenzdatei gespeichert.

Wurde die Messung auf dem Stahlpanzer des Gefäßes durchgeführt und liegt eine Datei vor, welche ein Vergleichsprofil (Zeichnung) des Gefäßes enthält, wird mit Hilfe eines Datenverarbeitungsgeräts eine Deformations-Auswertung durchgeführt und eine Meßdatei bezüglich des aktuellen Stahlpanzerprofils erzeugt. Bei Messung des Dauerfutters wird dagegen die entsprechende Meßdatei erstellt und diese in bezug auf das Stahlpanzerprofil bzw., falls Meßwerte über dieses nicht vorhanden sind, in bezug auf das Vergleichsprofil ausgewertet.

3. Die Verschleiß-Messung erfaßt das mit dem Verschleißfutter ausgekleidete Gefäß und ist praktisch jederzeit am ausgeleerten Gefäß durchführbar. Hierbei ist vor allem eine möglichst kurze Gesamtzeit der Messung wichtig, um die Produktion nicht zu behindern. Das Verschleißprofil wird wiederum in einer Datei gespeichert.

In den meisten Fällen ist die Gefäßmündung bei dieser Messung verdreckt, so daß sie mit Hilfe der Basis-Datei vor jeder Messung rekonstruiert werden muß (Scanauswertung). Anschließend kann aus den aktuellen Profildaten und einer vorgegebenen Stahlmenge der Badspiegel berechnet werden. Um die aktuelle Steindicke des Verschleißfutters (Reststeinstärke) zu erhalten, wird das zuvor aufgenommene Referenzprofil des Dauerfutters aus der Referenzdatei ausgelesen und mit der aktuellen Messung verglichen.

Bei jeder Messung (Verschleiß, Referenz oder Basis) werden i.a. mehrere Scans durchgeführt, z. B. Wiederholungs-Scans, Scans bei unterschiedlicher Objektkippung oder aus verschiedenen Meßpositionen.

Die typischen 450 x 450 Meßpunkte eines Scans können optimal in einer Scan-Datei abgespeichert werden. Jeder Meßpunkt kann dabei die o.g. fünf Meßwerte enthalten, nämlich

- Distanz Rad zwischen Meßgerät und reflektierender Stelle des Objekts
- Amplitude des reflektierten LASER-Pulses LP'
- Wärmestrahlung WS an der reflektierenden Stelle des Objekts
- Horizontal- und Vertikalwinkel, unter der der LASER-Puls LP von dem Meßgerät emittiert wird

Da die Position des Gefäßes zum Meßgerät im Regelfalle nicht bekannt ist, werden Positions-Scans nach dem erfindungsgemäßen Verfahren durchgeführt, bei welchen saubere außenliegende Strukturen erfaßt werden. Hieraus läßt sich dann die unbekannte Meßposition des Meßgerätes in Bezug zum Gefäß ermitteln. Alle diese Scans zusammen und ggf. externe Meßwerte (z. B. durch Inclinometer vorbekannte Kippwinkel des Konverters) bilden die Rohdaten der Messung.

Am Beispiel einer Konvertermessung soll im folgenden gezeigt werden, wie sich die Messung aus den einzelnen Scans zusammensetzt.

Nach dem Aufstellen des Meßgerätes 100 in der Meßposition M (vgl. Fig. 11a) wird das Gefäß G in Kippstellung 0 gefahren. Der Bediener gibt - falls durch ein Inclinometer bekannt - den aktuellen Kippwinkel ein und nimmt den Positions-Scan Nr. 1 auf.

Anhand dieser Rohdaten wird mittels des erfindungsgemäßen Verfahrens die Position des Meßgerätes zum Gefäß G ermittelt (Scanauswertung).

Die einzelne Scanauswertung kann auch erst nach Aufnahme aller Scans erfolgen, um die Produktion nicht unnötig zu verzögern.

Nun wird das Gefäß G in die Kippstellung I gedreht. Der Bediener gibt wieder den aktuellen Kippwinkel ein und nimmt den Meß-Scan Nr. 1 auf. Ist die Scanauswertung des Positions-Scans bereits erfolgt, kann das Programm nun direkt die Position des Mündungskreises berechnen und in das Amplitudenbild einblenden. Der Bediener führt nun in gleicher Weise die zwei weiteren Meß-Scans Nr. 2 und Nr. 3 bei den Kippstellungen II und III durch.

Um die seitlichen oberen Flanken des Gefäßes G bei 90° Objektwinkel zu vermessen, welche in diesem Beispiel durch die Mündung verdeckt sein sollen, bewegt der Bediener das Meßgerät 100 in die Meßposition L. Um die genaue Lage des Meßgerätes 100 in dieser Position zu vermessen, dreht er das Gefäß G wieder in Kippstellung 0 und nimmt den Positions-Scan Nr. 2 auf. Anschließend dreht er den Konverter in Kippstellung II und nimmt den Meß-Scan Nr. 4 auf. Es wird erfaßt, zu welchem Positions-Scan dieser Meß-Scan gehört und dem Bediener angezeigt.

Zur Erfassung der oberen Gefäßflanken bei 270° Objektwinkel wird das Meßgerät 100 nun auf Meßposition R gestellt, das Gefäß wieder auf Kippstellung 0 gedreht und Positions-Scan Nr. 3 aufgenommen. Anschließend wird das Gefäß in Stellung II gedreht und Meß-Scan Nr. 5 aufgenommen.

Die hier beschriebene Abfolge läßt sich auch in Kurzform so schreiben:

| 1) | Positions-Scan Nr. 1 | M 0 |
|----|---------------------|------|
| 2) | Meß-Scan Nr. 1 | M I |
| 3) | Meß-Scan Nr. 2 | M II |
| 4) | Meß-Scan Nr. 3 | M III |
| 5) | Positions-Scan Nr. 2 | L 0 |
| 6) | Meß-Scan Nr. 4 | L II |
| 7) | Positions-Scan Nr. 3 | R 0 |
| 8) | Meß-Scan Nr. 5 | R II |

Es gelten hierbei folgende Regeln:

Das Datenverarbeitungsgerät nimmt die Numerierung der Positions-Scans und Meß-Scans so vor, daß die Nummern jeweils von unten nach oben aufgefüllt werden. Ein Meß-Scan wird dem zuletzt durchgeführten Positions-Scan zugeordnet. Als erster Scan muß immer ein Positions-Scan erfolgen.

Nun sind alle 8 Scan-Speicher mit Scandaten gefüllt und die Rohdatenbasis damit erstellt. Die Produktion im Werk kann fortgesetzt werden.

Wurde die Scanauswertung noch nicht unmittelbar nach jedem Scan durchgeführt, so kann diese später durchgeführt werden. Als Ergebnis sind die Transformations-Matrizen aller 5 Meß-Scans berechnet.

Anschließend wird die eigentliche Auswertung ausgeführt. Das Datenverarbeitungsgerät transformiert nun zunächst die Meßpunkte vom Gerätesystem ins Objektsystem und sortiert dabei diejenigen Meßpunkte aus, welche nicht zum Gefäßinneren gehören. Anschließend berechnet es die Reststeinstärken durch Vergleich mit der Referenz-Datei. Um die Daten der Meßdatei und damit die Diagramme der Auswertung zu berechnen, mittelt das Programm die Meßpunkte in spezieller Weise. Die Meßdatei wird unter fortlaufender Nummer abgespeichert und die Diagramme dargestellt und ausgedruckt. Der Bediener kann nun per Hand die Berechnung bestimmter Längsschnitte durch das Gefäß zusätzlich ausdrucken, weil an dieser Stelle z. B. ein besonders dünnes Verschleißfutter gemessen wurde. Damit ist sowohl die Auswertung als auch die Messung abgeschlossen.

Vorstehend wurde die Positionsbestimmung des Gefäßes zum Meßgerät und die anschließende Vermessung des Gefäßes am Beispiel eines Konverters beschrieben. Da das erfindungsgemäße Verfahren zur Positionsbestimmung beliebiger Objekte geeignet ist, versteht es sich, daß auch die Positionsbestimmung und anschließende Vermessung anderer metallurgischer Gefäße mit diesem Verfahren erfolgen kann.

Handelt es sich bei dem Gefäß um eine Pfanne, so wird diese üblicherweise auf der Seite liegend vermessen.

Hierzu wird als bekannte Struktur der Wand-Boden-Operator zur Ermittlung des Koordinatensystems der Pfanne benutzt. Mit diesem Operator wird zunächst die Lage der Bodeninnenkante ohne Feuerfestmaterial vermessen. Anschließend werden Positionen bekannter weiterer Strukturen der Pfanne, die auch bei der Verschleißmessung reproduzierbar wiedergebbar sind, bestimmt und in Relation zu einem das Pfannengehäuse etwa parallel zur Öffnung umgebenden, seitlichen Ring gebracht. Die gemessene Lage der Strukturen wird im Objektkoordinatensystem erfaßt und abgespeichert und später zur Positionsbestimmung mit den dann gemessenen Werten verglichen.

Ein wesentlicher Vorteil des erfindungsgemäßen Verfahrens ist es, daß die Positionsbestimmung des Gefäßes zum Meßgerät in kurzer Zeit erfolgt und - wie bereits beschrieben - die einzelne Scanauswertung auch erst nach Aufnahme aller Scans erfolgen kann, wodurch die Meßzeit abermals reduziert wird.

Es ist somit durch das erfindungsgemäße Verfahren erstmals möglich, auch das Innere von heißen metallurgischen Gefäßen zu vermessen, die nicht ausreichend kippbar sind, so daß sich das Meßgerät oberhalb dieser Gefäße in der heißen Zone für die Dauer der Messung befinden muß.

Die hieraus resultierende extreme Temperaturbelastung als auch die für die Produktion gesetzten zeitlichen Rahmenbedingungen erfordern eine sehr kurze Meßzeit.

Als wesentliches Anwendungsbeispiel seien hier Lichtbogenöfen genannt, bei denen das Meßgerät nach Abnahme des Deckels etwa mittig über die Öffnung des Ofens gebracht werden kann. Als bekannte Struktur zur Bestimmung der Position Ofen - Meßgerät kann dann vorzugsweise der Öffnungsrand dienen, die Messung erfolgt dann mittels des Mündungsoperators.

**BEZUGSZEICHENLISTE**

1    Boden
2    Wandung
3    Mündung

EP 1 234 193 B1

| 4 | Innenwandung |
|---|---|

4 Innenwandung
d Außendurchmesser des Mündungsringes
b Dicke des Mündungsringes
A Punkt innerhalb des Gefäßes
B Schnittpunkt Boden/Innenwand
C Punkt auf innerer Mündungsbegrenzung
D Punkt etwa in Mitte zwischen innerer und äußerer Mündungsbegrenzung
E Punkt auf äußerer Mündungsbegrenzung
P Abtastpunkt
M Kugelmittelpunkt
100 Meßgerät
10 Sender
11 Empfänger
12 Polygonspiegel
LP LASER-Pulse
O Objekt
X Achse
Y Achse

**Patentansprüche**

1. Verfahren zur Identifikation und Bestimmung der Position eines Objekts (0), insbesondere eines metallurgischen Gefäßes (6), insbesondere zur Vermessung seiner Feuerfestauskleidung,

   bei welchem von einer Sendeeinrichtung (10) elektromagnetische Strahlung ausgesandt und von einer Empfangseinrichtung (11) elektromagnetische Strahlung empfangen wird,
   bei welcher eine Zeiterfassungseinrichtung die Laufzeit eines Pulses der elektromagnetischen Strahlung erfaßt und bei welcher die gepulste elektromagnetische Strahlung mittels einer Ablenkeinrichtung (12) in vorbestimmter periodischer Weise in zwei zueinander senkrechten Richtungen abgelenkt wird,
   **dadurch gekennzeichnet,**
   **daß** ein Operator im Hinblick auf eine zwei- oder dreidimensionale Struktur bekannter Form und Größe definiert wird,
   **daß** anschließend im Bereich der Struktur Distanzwerte Rad(m,n) und zugehörige Meßwinkel ($\varphi(n)$, $\vartheta(m)$) ermittelt werden,
   und **daß** der gemessene Distanzwert Rad(m,n) und die zugehörigen Meßwinkel ($\varphi(m)$,$\vartheta(n)$) zur Skalierung des Operators herangezogen werden,
   **daß** zur Skalierung des Operators im Bildkoordinatensystem i:[-imax, imax, $\Delta$i], j: [-jmax, jmax, $\Delta$j] die Ausdehnung [imax, jmax] und Auflösung [$\Delta$i,$\Delta$j] des Operators im Bildkoordinatensystem und die Erwartungswerte des Operators R(m+j,n+j) an die gemessenen Polarkoordinaten (Rad(m,n),$\varphi(m)$,$\vartheta(n)$) angepaßt werden,
   und **daß** schließlich aus den Differenzen zwischen den Erwartungswerten des Operators R(m+i,n+j) und den Meßwerten Rad(m+i,n+j) ein Ergebniswert in der Form

$$S(m,n) = \sum_{i,j} \{R(m+i,n+j) - Rad(m+i,n+j)\}^2 / norm\ (m,n)$$

   gebildet wird und aus der Position des minimalen Ergebniswertes die Lage der gesuchten Struktur bestimmt wird.

2. Verfahren nach Anspruch 1, **dadurch gekennzeichnet, daß** es die folgenden Verfahrensschritte umfaßt:

   - Definition des Operators im zwei-dimensionalen bzw. drei-dimensionalen Raum anhand der bekannten, zu suchenden Form und Größe der Struktur;
   - sodann wiederholt in Form einer Schleife
        Pixelweises Abtasten der Matrix Rad(m,n);
        Skalierung des Operators anhand der aktuellen abgetasteten Koordinate, in dem

**12**

EP 1 234 193 B1

a) die Pixelgrenzen im gerasterten Polarkoordinatenbild und

b) die Erwartungsdistanzen R(m+i,n+j) für alle Pixel des Operators in den zuvor berechneten Grenzen

berechnet werden;

Berechnen des Operator-Ergebnisses an der abgetasteten Stelle (m,n) über die quadratische Abweichung zwischen Erwartungsdistanz und gemessener Distanz zu

$$S(m,n) = \sum_{i,j} \{R(m+i,n+j) - Rad(m+i,n+j)\}^2 / norm\,(m,n)$$

- Auswählen der gesuchten Koordinate Rad(m_opt,n_opt) bzw. Rad ($\varphi$_opt,$\vartheta$_opt) mit dem besten Operator-Ergebniswert durch Minimumsberechnung.

**3.** Verfahren nach Anspruch 1 oder 2, **dadurch gekennzeichnet, daß** zusätzlich zu den Distanzwerten Rad (m,n) Intensitätswerte Amp(m,n) der rückgestreuten elektromagnetischen Strahlung gemessen werden.

**4.** Verfahren nach Anspruch 1 oder 2, **dadurch gekennzeichnet, daß** als Struktur eine Kugel verwendet wird.

**5.** Verfahren nach Anspruch 3, **dadurch gekennzeichnet, daß** als Struktur eine farblich hell gegenüber der Umgebung abgesetzte flächenförmige Marke verwendet wird und der Operator über Korrelationsverfahren im Amplitudenbild skaliert wird.

**6.** Verfahren nach Anspruch 1 oder 2, **dadurch gekennzeichnet, daß** als Struktur das Gefäß (6) selbst dient und der Operator einen Punkt in seinem Mündungsbereich sucht und um diesen verteilt mindestens zwei weitere Punkte auf der Mündung des Gefäßes, wobei zur Kontrolle mindestens ein weiterer Punkt im Gefäßinneren gesucht wird.

**7.** Verfahren nach einem der Ansprüche 1, 2 oder 6, **dadurch gekennzeichnet, daß** die Distanz- und Winkelwerte von Punkten auf der Gefäßmündung in radial zur gefundenen Gefäßmitte verlaufenden Suchfenstern gemessen werden, hieraus ein Vektor Rad(K) extrahiert wird, auf welchem nach einer Strecke der vorgegebenen Länge (b), die etwa der Dicke des Mündungsringes entspricht, mittels eines skalierten Operators gesucht wird.

**8.** Verfahren nach einem der Ansprüche 1 bis 7, **dadurch gekennzeichnet, daß** zusätzlich der Neigungswinkel $\gamma$ des Gefäßes, vorzugsweise mittels eines das Gefäß um eine senkrecht zu seiner Längsachse verlaufenden Achse schwenkbar aufnehmenden Inklinometers erfaßt und bei der Positionsbestimmung des Gefäßes berücksichtigt wird.

**9.** Verfahren nach einem der Ansprüche 1, 2 oder 6, **dadurch gekennzeichnet, daß** als Struktur der Übergangsbereich von Wand und Boden des Gefäßes dient und der Operator durch zwei Strecken der Längen ($\Delta x, \Delta z$) definiert ist, deren Enden sich in einem Punkt berühren und in einem vorgegebenen Winkel ($\delta$) zueinander stehen.

**10.** Anwendung des Verfahrens nach einem der Ansprüche 1 bis 9 zur Bestimmung der Position eines Konverters.

**11.** Anwendung des Verfahrens nach einem der Ansprüche 1 bis 9 zur Bestimmung der Position einer Pfanne.

**12.** Anwendung des Verfahrens nach einem der Ansprüche 1 bis 9 zur Bestimmung der Position eines Lichtbogenofens.

**13.** Vorrichtung (100) zur Durchführung des Verfahrens nach einem der Ansprüche 1 bis 9, umfassend
eine Sendeeinrichtung (10) zum Abstrahlen einer gepulsten, elektromagnetischen Strahlung;
eine Empfangseinrichtung (11) zum Empfangen der an einem Objekt reflektierten elektromagnetischen Strahlung;
eine Zeiterfassungseinrichtung zur Erfassung der Laufzeit eines Pulses der elektromagnetischen Strahlung zwischen dem Abstrahlen und dem Empfangen nach Reflexion an dem Objekt;
eine Ablenkeinrichtung (12) zur vorbestimmten, periodischen: Ablenkung der gepulsten, elektromagnetischen Strahlung in zwei zueinander senkrechten Richtungen;
**gekennzeichnet durch**

eine Datenerfassungs/verarbeitungseinrichtung zur Erfassung der Winkel ($\varphi(n),\vartheta(n)$), unter denen die elektromagnetische Strahlung in den zueinander senkrechten Richtungen abgestrahlt worden ist, und der Laufzeit bzw. der daraus ermittelten Distanzwerte Rad(m,n), sowie zum Speichern vorbekannter bzw. vorermittelter räumlicher Strukturen und zum Vergleich **durch** Erfassung der Winkel und der Laufzeit gemessener räumlicher Strukturen mit den vorbekannten bzw. vorermittelten Strukturen,

wobei ein Operator im Hinblick auf eine zwei- oder dreidimensionale Struktur bekannter Form und Größe definiert wird,

wobei anschließend im Bereich der Struktur die Distanzwerte Rad(m,n) und zugehörige Meßwinkel ($\varphi(n)$, $\vartheta(m)$) ermittelt werden,

wobei der gemessene Distanzwert Rad(m,n) und die zugehörigen Meßwinkel ($\varphi(m),\vartheta(n)$) zur Skalierung des Operators herangezogen werden, wobei zur Skalierung des Operators im Bildkoordinatensystem i:[-imax, imax, $\Delta$i], j: [-jmax, jmax, $\Delta$j] die Ausdehnung [imax,jmax] und Auflösung [$\Delta$i,$\Delta$j] des Operators im Bildkoordinatensystem und die Erwartungswerte des Operators R(m+j,n+j) an die gemessenen Polarkoordinaten (Rad(m,n),$\varphi(m),\vartheta(n)$) angepaßt werden,

und wobei schließlich aus den Differenzen zwischen den Erwartungswerten des Operators R(m+i,n+j) und den Meßwerten Rad(m+i,n+j) ein Ergebniswert in der Form

$$S(m,n) = \sum_{i,j} \{R(m+i,n+j) - Rad(m+i,n+j)\}^2 / norm\,(m,n)$$

gebildet wird und aus der Position des minimalen Ergebniswertes die Lage der gesuchten Struktur bestimmt wird.

14. Vorrichtung nach Anspruch 13, **dadurch gekennzeichnet, daß** die Empfangseinrichtung (11) zusätzlich Mittel zum Erfassen der Amplitude (AM') der an dem Objekt (0) reflektierten elektromagnetischen Strahlung umfaßt.

15. Vorrichtung nach Anspruch 13 oder 14, **dadurch gekennzeichnet, daß** die Empfangseinrichtung (11) zusätzlich Mittel zum Erfassen der etwa an dem die elektromagnetische Strahlung reflektierenden Ort abgestrahlten Wärmestrahlung umfaßt.

16. Vorrichtung nach einem der Ansprüche 13 bis 15, **dadurch gekennzeichnet, daß** die Sendeeinrichtung (10) eine im Pulsbetrieb betreibbare LASER-Diode ist.

17. Vorrichtung nach einem der Ansprüche 13 bis 16, **dadurch gekennzeichnet, daß** die Empfangseinrichtung (11) eine an die Frequenz der von der LASER-Diode emittierten Strahlung angepaßte Foto-Diode ist.

18. Vorrichtung nach einem der Ansprüche 13 bis 17, **dadurch gekennzeichnet, daß** die Ablenkeinrichtung ein um eine senkrecht zu seinen einander parallelen Seiten verlaufende Achse (X) rotierbarer Polygonspiegel (12) umfaßt, dessen spitzwinklig aufeinandertreffende Seiten die elektromagnetische Strahlung reflektieren.

19. Vorrichtung nach einem der Ansprüche 13 bis 18, **dadurch gekennzeichnet, daß** die Ablenkeinrichtung Mittel umfaßt, mit denen die Meßeinrichtung (100) um eine zur Rotationsachse (X) des Polygonspiegels (12) etwa senkrechte Achse (Y) hin- und herschwenkbar ist.

20. Vorrichtung nach einem der Ansprüche 13 bis 19, **dadurch gekennzeichnet, daß** die Meßeinrichtung an einem Tragarm angebracht ist, derart, daß sie zwischen einer von dem metallurgischen Gefäß (6) - beispielsweise einem Lichtbogenofen - entfernte Position und einer Position oberhalb des geöffneten metallurgischen Gefäßes oder innerhalb des geöffneten metallurgischen Gefäßes hinund herverlagerbar ist.

21. Vorrichtung nach Anspruch 20, **dadurch gekennzeichnet, daß** an dem Tragarm in zur Meßeinrichtung festem räumlichen Bezug eine Einrichtung zum Auftrag von Feuerfestmaterial in das Innere des metallurgischen Gefäßes vorgesehen ist.

22. Vorrichtung nach Anspruch 21, **dadurch gekennzeichnet, daß** die Einrichtung zum Auftrag des Feuerfestmaterials ein an sich bekannter Spritzroboter zum Auftrag monolithischen Feuerfestmaterials im Inneren eines metallurgischen Gefäßes ist.

**Claims**

1. Method for identifying and determining the position of an object (0), especially a metallurgical vessel (6), especially for the measurement of its refractory lining,

   wherein electromagnetic radiation is emitted from a transmission device (10), and electromagnetic radiation is received by a receiver device (11),

   wherein a time-registering device registers the propagation time of a pulse of the electromagnetic radiation and wherein the pulsed electromagnetic radiation is deflected by means of a deflection device (12) in a predetermined, periodic manner in two mutually perpendicular directions,

   **characterised in that**

   an operator is defined with reference to a two-dimensional or three-dimensional structure of known shape and size, that distance values Rad(m,n) and associated angular measurements ($\varphi$(n), $\vartheta$(m)) are then determined in the region of the structure

   and that the measured distance value Rad(m,n) and the associated angular measurements ($\varphi$(m), $\vartheta$(n)) are used for scaling the operator,

   that in order to scale the operator in the image coordinate system i:[-imax,imax,$\Delta$i],j:[-jmax,jmax,$\Delta$j], the extension [imax,jmax] and resolution [$\Delta$i,$\Delta$j] of the operator in the image coordinate system and the anticipated values of the operator R(m+j, n+j) are adapted to the measured polar coordinates (Rad(m,n),$\varphi$(m),$\vartheta$(n)),

   and finally that, from the differences between the anticipated values of the operator R(m+i,n+j) and the measured values Rad(m+i,n+j), a result value in the form of

$$S(m,n) = \sum_{i,j}\{R(m+i,n+j)-Rad(m+i,n+j)\}^2/norm(m,n)$$

   is formed, and the location of the structure sought is determined from the position of the minimum result value.

2. Method according to claim 1, **characterised in that** it comprises the following procedural stages:

   - definition of the operator in two-dimensional and/or three-dimensional space on the basis of the known shape and size of the structure sought;
   - and then repeatedly in the form of a loop

     pixel-wise scanning of the matrix Rad(m,n);

     scaling of the operator on the basis of the currently scanned coordinates, wherein

     a) the pixel thresholds within the rasterised polar coordinate image and
     b) the anticipated distances R(m+i,n+j) for all pixels of the operator in the previously calculated thresholds

     are calculated;

     calculation of the operator result at the scanned position (m,n) via the quadratic deviation between the anticipated distance and the measured distance to give

$$S(m,n) = \sum_{i,j}\{R(m+i,n+j)-Rad(m+i,n+j)\}^2/norm(m,n)$$

   - selection of the sought coordinates
     Rad(m_opt,n_opt) and/or ($\varphi$_opt,$\vartheta$_opt) with the best operator result value by calculation of the minimum.

3. Method according to claim 1 or 2, **characterised in that**, in addition to the distance values Rad(m,n), intensity values Amp(m,n) for the back-scattered electromagnetic radiation are measured.

4. Method according to claim 1 or 2, **characterised in that** a sphere is used as the structure.

5. Method according to claim 3, **characterised in that** a flat-shaped marker, distinguished as light in colour against the background, is used as the structure, and that the operator is scaled in the amplitude image using correlation methods.

6. Method according to claim 1 or 2, **characterised in that** the vessel (6) itself is used as the structure, that the operator seeks a point in the region of its opening and at least two further points distributed around this region at the opening of the vessel, wherein, for control purposes, at least one further point is sought in the interior of the vessel.

7. Method according to any one of claims 1, 2 or 6, **characterised in that** the distance values and angle values of points at the opening of the vessel are measured in search windows running radially to the located centre of the vessel, that a vector Rad(K) is extracted from these, on which a distance of the predetermined length (b), which approximately corresponds to the thickness of the opening ring, is sought by means of a scaled operator.

8. Method according to any one of claims 1 to 7, **characterised in that** the angle of inclination $\gamma$ of the vessel is additionally determined, preferably by means of an inclinometer recording the vessel in a rotatable manner about an axis running perpendicular to its longitudinal axis, and taken into account in determining the position of the vessel.

9. Method according to any one of claims 1, 2 or 6, **characterised in that** the transitional region between the wall and base of the vessel is used as the structure, and the operator is defined by two distances of lengths ($\Delta x, \Delta z$), of which the ends converge into a point and which are at a predetermined angle ($\delta$) relative to one another.

10. Use of the method according to any one of claims 1 to 9 for determining the position of a converter.

11. Use of the method according to any one of claims 1 to 9 for determining the position of a ladle.

12. Use of the method according to any one of claims 1 to 9 for determining the position of an arc furnace.

13. Device (100) for implementation of the method according to any one of claims 1 to 9 comprising

> a transmitter device (10) for emitting a pulsed, electromagnetic radiation;
> a receiver device (11) for receiving the electromagnetic radiation reflected from an object;
> a time-registering device for registering the propagation time of a pulse of the electromagnetic radiation between emission and reception after reflection on an object;
> a deflection device (12) for the predetermined, periodic deflection of the pulsed, electromagnetic radiation in two mutually perpendicular directions;

> **characterised by**
> a data registering/processing device for registering the angle ($\varphi(n), \vartheta(n)$), at which the electromagnetic radiation was emitted in the mutually perpendicular directions, and the propagation time and/or the distance values Rad(m, n) determined from the same, and for storage of previously known and/or previously determined spatial structures, and for comparison by registration of the angle and the propagation time of measured spatial structures with the previously known and/or previously determined structures,
> wherein an operator is defined with reference to a two-dimensional or three-dimensional structure of known shape and size,
> wherein, following this, in the region of the structure, the distance values Rad(m,n) and associated measured angles ($\varphi(n), \vartheta(m)$) are determined,
> wherein the measured distance value Rad(m,n) and the associated measured angles ($\varphi(m), \vartheta(n)$) are used for scaling the operator, wherein for scaling the operator in the image coordinate system i:[-imax,imax,$\Delta$i], j:[-max, jmax,$\Delta$j], the extension [imax,jmax] and resolution [$\Delta$i,$\Delta$j] of the operator in the image coordinate system, and the anticipated values of the operator R(m+j, n+j) are adapted to the measured polar coordinates (Rad(m,n),$\varphi$(m,n), $\vartheta$(n)),
> and wherein, finally, from the differences between the anticipated values of the operator R(m+i,n+j) and the measured values Rad(m+l,n+j), a result value in the form

$$S(m,n) = \sum_{i,j} \{R(m+i,n+j)-Rad(m+i,n+j)\}^2/norm(m,n)$$

is formed, and the location of the sought structure is determined from the position of the minimum result value.

14. Device according to claim 13, **characterised in that** the receiver device (11) additionally comprises means for registering the amplitude (AM') of the electromagnetic radiation reflected on the object (0).

15. Device according to claim 13 or 14, **characterised in that** the receiver device (11) additionally comprises means for registering any thermal radiation given off at the site reflecting the electromagnetic radiation.

16. Device according to any one of claims 13 to 15, **characterised in that** the transmission device (10) is a laser diode capable of being operated in pulse mode.

17. Device according to any one of claims 13 to 16, **characterised in that** the receiver device (11) is a photodiode adapted to the frequency of the radiation emitted by the laser diode.

18. Device according to any one of claims 13 to 17, **characterised in that** the deflection device comprises a polygonal mirror (12) capable of being rotated about an axis (X) running perpendicular to its mutually parallel sides, of which the sides, which meet one another in an acute angle, reflect the electromagnetic radiation.

19. Device according to any one of claims 13 to 18, **characterised in that** the deflection device provides means with which the measuring device (100) can be rotated to and fro about an axis (Y) approximately perpendicular to the axis of rotation (X) of the polygonal mirror.

20. Device according to any one of claims 13 to 19, **characterised in that** the measuring device is mounted on a carrier arm in such a manner that it can be displaced to and fro between a position remote from the metallurgical vessel (6) - for example, an arc furnace - and a position above the open metallurgical vessel or inside the open metallurgical vessel.

21. Device according to claim 20, **characterised in that** a device for the application of refractory material to the interior of the metallurgical vessel is provided on the carrier arm in a fixed spatial reference to the measuring device.

22. Device according to claim 21, **characterised in that** the device for the application of the refractory material is a per se known robot spraying device for the application of monolithic refractory material to the interior of a metallurgical vessel.

**Revendications**

1. Procédé pour identifier et déterminer la position d'un objet (0), notamment d'un récipient métallurgique (6) et en particulier pour mesurer son revêtement réfractaire, selon lequel
on émet un rayonnement électromagnétique à l'aide d'une installation d'émission (10) et on reçoit le rayonnement électromagnétique par une installation de réception (11),
une installation de saisie de temps saisit le temps de parcours d'une impulsion du rayonnement électromagnétique et
le rayonnement électromagnétique impulsiortnel est dévié à l'aide d'une installation de déviation (12) suivant une périodicité prédéterminée dans deux directions perpendiculaires,
**caractérisé en ce qu'**
on définit un opérateur par rapport à une structure bi- ou tridimensionnelle de forme et de taille connues,
ensuite, au niveau de la structure, on détermine des mesures de distance Rad(m, n) et des mesures d'angle ($\varphi$(n), $\theta$(m)) correspondants, et
on utilise la distance mesurée Rad(m, n) et l'angle mesuré ($\varphi$(n), $\theta$(m)) pour mettre l'opérateur à l'échelle,
pour mettre à l'échelle l'opérateur dans le système de coordonnées d'image i :[-imax, imax, $\Delta$i], j :[-jmax, jmax, $\Delta$j]
on adapte l'extension [imax, jmax] et la résolution [$\Delta$i, $\Delta$j] de l'opérateur dans le système de coordonnées d'images, et on adapte les valeurs prévisionnelles de l'opérateur R(m+i, n+j) aux coordonnées polaires (Rad(m, n),$\varphi$(m),$\theta$

(n)), mesurées, et
à partir de la différence entre les valeurs prévisionnelles de l'opérateur R(m+i, n+j) et les valeurs mesurées Rad (m+i,n+j) on forme un résultat

$$S(m,n) = \sum_{i,j} \{R(m+i,n+j) - Rad(m+i,n+j)\}^2 / norm\ (m,n)$$

et à partir de la position du résultat minimum, on détermine la position de la structure recherchée.

2. Procédé selon la revendication 1,
**caractérisé par**
les étapes opératoires suivantes :

- définition de l'opérateur dans un espace bi- ou tridimensionnel à l'aide de la forme et de la dimension connues, à rechercher, de la structure et ensuite on répète la boucle suivante :

- détection par pixel de la matrice Rad(m,n),
- mise à l'échelle de l'opérateur à l'aide des coordonnées actuelles détectées

 a) en calculant les limites des pixels dans l'image de coordonnées polaires tramées et
 b) en calculant les distances prévisionnelles R(m+i, n+j) pour tous les pixels de l'opérateur dans les limites calculées au préalable,

- calcul du résultat de l'opérateur à l'emplacement détecté (m,n) avec la déviation quadratique entre la distance prévisionnelle et la distance mesurée selon la formule :

$$S(m,n) = \sum_{i,j} \{R(m+i,n+j) - Rad(m+i,n+j)\}^2 / norm\ (m,n)$$

- sélection des coordonnées recherchées Rad(m_opt,n_opt) ou Rad($\varphi$_opt,$\theta$_opt) avec le meilleur résultat de l'opérateur en calculant un minimum.

3. Procédé selon la revendication 1 ou 2.
**caractérisé en ce qu'**
en plus des valeurs de distances Rad(m,n), on mesure des valeurs d'intensité Amp(m,n) du rayonnement électronique renvoyé.

4. Procédé selon la revendication 1 ou 2,
**caractérisé en ce que**
comme structure on utilise une sphère.

5. Procédé selon la revendication 3,
**caractérisé en ce que**
comme structure on utilise un repère en surface de couleur claire, détaché par rapport à l'environnement et on met à l'échelle l'opérateur par des procédés de corrélation dans l'image d'amplitude.

6. Procédé selon la revendication 1 ou 2,
**caractérisé en ce que**
comme structure on utilise le récipient (6) lui-même et l'opérateur cherche un point dans la zone de son embouchure et autour de ce point, il cherche au moins deux autres points, répartis sur l'embouchure du récipient, et pour le contrôle on cherche au moins un autre point à l'intérieur du récipient.

7. Procédé selon l'une des revendications 1, 2 ou 6,

**caractérisé en ce qu'**

on mesure la distance et l'angle de point à l'embouchure du récipient dans des fenêtres de recherche dirigées radialement par rapport au milieu trouvé du récipient, on en extrait un vecteur Rad(K) et on le recherche sur un trajet de longueur prédéterminée (b) qui correspond sensiblement à l'épaisseur de la bague de l'embouchure à l'aide d'un opérateur mis à l'échelle.

8. Procédé selon l'une des revendications 1 à 7,
   **caractérisé en ce qu'**
   en plus on saisit l'angle d'inclinaison $\gamma$ du récipient, de préférence à l'aide d'un inclinomètre recevant de manière basculante le récipient autour d'un axe perpendiculaire à son axe longitudinal et cet angle d'inclinaison est pris en compte pour déterminer la position du récipient.

9. Procédé selon l'une des revendications 1, 2 ou 6,
   **caractérisé en ce que**
   la structure est la zone de transition entre la paroi et le fond du récipient et l'opérateur est défini par deux trajets de longueur $(\Delta x, \Delta z)$ dont les extrémités se touchent en un point et qui font entre eux un angle prédéfini $\delta$.

10. Application du procédé selon l'une des revendications 1 à 9, pour déterminer la position d'un convertisseur.

11. Application du procédé selon l'une des revendications 1 à 9, pour déterminer la position d'une cuve.

12. Application du procédé selon l'une des revendications 1 à 9, pour déterminer la position d'un four à arc électrique.

13. Dispositif (100) pour exécuter le procédé selon l'une des revendications 1 à 9, comprenant :

    - une installation d'émission (10) pour émettre un rayonnement électromagnétique impulsionnel,
    - une installation de réception (11) pour recevoir le rayonnement électromagnétique réfléchi par un objet.
    - une installation de saisie de temps pour saisir le temps de parcours d'une impulsion du rayonnement électromagnétique entre son émission et sa réception après réflexion sur l'objet,
    - une installation de déflexion (12) pour dévier périodiquement de manière prédéfinie le rayonnement électromagnétique impulsionnel dans deux directions perpendiculaires.

    **caractérisé par**

    - une installation de saisie et de traitement de données pour saisir l'angle $(\varphi(n),\theta(n))$ suivant lequel le rayonnement électromagnétique a été émis dans des directions perpendiculaires entre elles et le temps de parcours ou la distance déduite Rad(m,n) ainsi que pour mettre en mémoire des structures spatiales connues préalablement ou déterminées au préalable et pour comparer par la saisie de l'angle et du temps de parcours de structures spatiales mesurées à celles des structures connues ou prédéfinies antérieurement,
    - un opérateur défini sur une structure bi- ou tridimensionnelle de forme et de dimensions connues, et
    - ensuite la détermination au niveau de la structure des valeurs de distance Rad(m,n) et d'angle $(\varphi(n),\theta(n))$ correspondants, la distance mesurée Rad(m,n) et l'angle mesuré $(\varphi(n),\theta(n))$ étant utilisés pour mettre l'opérateur à l'échelle, et
    - pour cette mise à l'échelle de l'opérateur dans le système de coordonnées image i :[-imax, imax, $\Delta$i], j : [-jmax, jmax, $\Delta$j], l'adaptation de l'extension [imax, jmax] et de la résolution [$\Delta$i,$\Delta$j] de l'opérateur dans le système de coordonnées d'image, et des valeurs prévisionnelles de l'opérateur R(m+i, n+j) aux coordonnées polaires mesurées (Rad(m, n),$\varphi(m),\theta(n))$ et

    finalement à partir de la différence entre les valeurs prévisionnelles de l'opérateur R(m+j,n+j) et les valeurs mesurées (Rad(m, n),$\varphi(m),\theta(n))$, formation d'un résultat donné par la relation suivante :

$$S(m,n) = \sum_{i,j} \{R(m+i,n+j) - Rad(m+i,n+j)\}^{2}/norm\ (m,n)$$

    puis à partir de la position du résultat minimum, détermination de la position de la structure recherchée.

**14.** Dispositif selon la revendication 13.
**caractérisé en ce que**
l'installation de réception (11) comporte en outre des moyens pour saisir l'amplitude (AM') du rayonnement électromagnétique réfléchi par l'objet (0).

**15.** Dispositif selon la revendication 13 ou 14,
**caractérisé en ce que**
l'installation de réception (11) comprend en outre des moyens pour saisir le rayonnement thermique de l'endroit réfléchissant le rayonnement électromagnétique.

**16.** Dispositif selon l'une des revendications 13 à 15,
**caractérisé en ce que**
l'installation d'émission (10) est une diode laser fonctionnant en mode impulsionnel.

**17.** Dispositif selon l'une des revendications 13 à 16,
**caractérisé en ce que**
l'installation de réception (11) est une photodiode adaptée à la fréquence du rayonnement émis par la diode laser.

**18.** Dispositif selon l'une des revendications 13 à 17,
**caractérisé en ce que**
l'installation de déflexion est un miroir polygonal (12) rotatif autour d'un axe (X) perpendiculaire aux faces parallèles, miroir dont les côtés qui se rencontrent à angle aigu réfléchissent le rayonnement électromagnétique.

**19.** Dispositif selon l'une des revendications 13 à 18,
**caractérisé en ce que**
l'installation de déflexion comprend des moyens qui permettent de basculer l'installation de mesure (100), alternativement autour d'un axe (Y) sensiblement perpendiculaire à l'axe de rotation (X) du miroir polygonal (12).

**20.** Dispositif selon l'une des revendications 13 à 19,
**caractérisé en ce que**
l'installation de mesure est montée sur un bras de support de façon à pouvoir être déplacé alternativement entre une position éloignée du récipient métallurgique (6) (par exemple d'un four à arc électrique) et une position au-dessus du récipient métallurgique, ouvert ou à l'intérieur du récipient métallurgique ouvert.

**21.** Dispositif selon la revendication 20,
**caractérisé en ce que**
le bras de support comporte dans une relation spatiale fixe par rapport à l'installation de mesure, une installation pour appliquer une matière réfractaire à l'intérieur du récipient métallurgique.

**22.** Dispositif selon la revendication 21,
**caractérisé en ce que**
l'installation pour appliquer la matière réfractaire est un robot pulvérisateur connu en soi pour appliquer une matière réfractaire monolithique à l'intérieur d'un récipient métallurgique.

## Fig. 1

## Fig. 2

Fig. 3b

Fig. 3c

Fig. 3a

Fig. 4a

Fig. 5a

Fig. 4b

Fig. 5b

Fig. 6a

Fig. 6b

Fig. 7a

Fig. 7b

Fig. 8

Fig. 9

## Fig. 10a

## Fig. 10b

Fig. 11a

Fig. 11b

Starte
Scan

Datei der Scans

Amp. Temp

Dist. H/V Winkel

| 1 | 2 | 3 | | 5 | 4 | 3 | 2 | 1 | Scan-Speicher
Pos.-Scan    Mess-Scan

Pos.-Scan
Auswertung

Scan-
Auswertung
(Trafo-Matrix)

Datei der
Basismessung

Transformation
und
Filterung

**Fig. 12**

Reststein-
Berechnung

Datei der
Referenzmessung

Mittelungen
auf Plotraster

Datei der
Verschleissmessung

| Bath | Point | Sct | Axi | 3-D | Wall | Bott |
Diagramme